Europäisches Patentamt

European Patent Office

Office européen des brevets

(19)

(11) Veröffentlichungsnummer: **0 002 502**
**B1**

(12) **EUROPÄISCHE PATENTSCHRIFT**

(21) Anmeldenummer: **78101596.1**

(22) Anmeldetag: **07.12.78**

(51) Int. Cl.³: **C 04 B 41/28**

(54) **Verfahren zum Verbessern von Wärmeschutzgegenständen**

(30) Priorität: **07.12.77 DE 2754517**

(43) Veröffentlichungstag der Anmeldung:
**27.06.79 Patentblatt 79/13**

(45) Bekanntmachung des Hinweises auf die Patenterteilung:
**17.09.80 Patentblatt 80/19**

(84) Benannte Vertragsstaaten:
**BE CH DE FR GB NL SE**

(56) Entgegenhaltungen:
**CH - A - 321 516**
**DE - A - 2 005 190**
**DE - A - 2 254 880**
**DE - A - 2 356 142**
**DE - A - 2 446 278**

(73) Patentinhaber: **WACKER-CHEMIE GMBH**
**Prinzregentenstrasse 22**
**D - 8000 München 22 (DE)**

(72) Erfinder: **Kratel, Günter, Dr.**
**Alpenblickstrasse 10**
**D - 8961 Durach (DE)**
**Stohr, Günter, Dr.**
**Stuibenstrasse 14**
**D - 8961 Durach (DE)**
**Katzer, Hans, Dr.**
**Sollner Strasse 10**
**D - 8000 München 71 (DE)**

Verfahren zum Verbessern von Wärmeschutzgegenständen.

Auf trockenem Wege hergestellte Wärmeschutzgegenstände aus Siliciumdioxyd mit einer Oberfläche von mindestens 50 m²/g, Trübungsmittel und gegebenenfalls anorganischer Faser sind bekannt, beispielsweise aus DE—AS 20 36 124, ausgelegt: 29. März 1973, Anmelder: Micropore Insulation Ltd. Es bestand nun die Aufgabe, solche Gegenstände zu verbessern, indem sie ausreichend wasserabweisend gemacht werden, ohne ihre mechanische Festigkeit zu beeinträchtigen, z.B. damit die Wärmeschutzgegenstände durch die Einwirkung von Wasser nicht verschlechtert werden. Durch das erfindungsgemäße Verfahren wird diese Aufgabe gelöst. Wird dagegen versucht, die vorstehend angegebene Aufgabe durch Verwendung von Siliciumdioxyd mit einer Oberfläche von mindestens 50 m²/g, wobei diese Oberfläche mehr oder weniger vollständig, z.B. mittels Trimethyläthoxysilan, hydrophobiert wurde, was z.B. wie in DE—A 20 05 190 und 23 56 142 beschrieben erfolgen kann, bei der Herstellung der Wärmeschutzgegenstände zu lösen, so werden Wärmeschutzgegenstände mit unbefriedigender mechanischer Festigkeit erhalten. Wird andererseits versucht, wasserabweisende, auf trockenem Wege hergestellte Wärmeschutzgegenstände aus Trübungsmittel und Siliciumdioxyd mit einer Oberfläche von mindestens 50 m²/g, wobei diese Oberfläche nur teilweise, z.B. mit Trimethyläthoxysilan, hydrophobiert wurde, oder mit einem Gemisch aus unbehandeltem Siliciumdioxyd und mehr oder weniger vollständig hydrophobiertem Siliciumdioxyd, wobei dieses Siliciumdioxyd jeweils eine Oberfläche von mindestens 50 m²/g aufweist, herzustellen, wobei bei dieser Herstellung jeweils anorganische Faser mitverwendet werden kann, so werden Wärmeschutzgegenstände erhalten, die zwar etwas wasserabweisend sind, aber verhältnismäßig geringe mechanische Festigkeit besitzen.

Gegenstand der Erfindung ist ein Verfahren zum Verbessern von auf trockenem Wege hergestellten Wärmeschutzgegenständen aus Siliciumdioxyd mit einer Oberfläche von mindestens 50 m²/g, Trübungsmittel und gebenenfalls anorganischer Faser, dadurch gekennzeichnet, daß die Oberfläche der zu verbessernden Gegenstände mit mindestens einer Organosiliciumverbindung mit 1 bis 4 Siliciumatomen hydrophobiert und überschüssige, hydrophobierende Organosiliciumverbindung entfernt wird.

Wärmeschutzgegenstände aus Siliciumdioxyd, Trübungsmittel und gegebenenfalls anorganischer Faser sind ohnehin nicht brennbar. Somit konnte DE—A 24 46 278 auch keine Anregung für die Lösung der erfindungsgemäß gestellten und gelösten Aufgabe geben. Die Matrix aus $RSiO_{3/2}$ gemäß DE—AS 24 46 278 dürfte auch viel mehr Siliciumatome als 4 Siliciumatome je Molekül enthalten.

Wärmeschutzgegenstände können auch als Wärmeisolationsgegenstände bezeichnet werden. Es kann sich dabei um Platten oder andere Formkörper handeln. Wenn es sich um Platten handelt, so können sie eine poröse Hülle, z.B. aus Glasfasergewebe oder Glasfasermatte, aufweisen. Weitere Beispiele für solche poröse Hüllen sind gemäß DE—AS 20 36 124 Baumwollgewebe, Papier und perforierte Polyäthylenfolie. Die Platten müssen aber nicht unbedingt umhüllt sein.

Aus den oben angegebenen Gründen wird für die Herstellung der Wärmeschutzgegenstände zweckmäßig als Siliciumdioxyd mit einer Oberfläche von mindestens 50 m²/g solches verwendet, das unbehandelt, also hydrophil, ist. Die hier in Beschreibung und Patentansprüchen angegebenen Werte für die Größe der Oberfläche des Siliciumdioxyds sind sogenannte BET-Werte, also Werte, die durch Stickstoffadsorption gemäß ASTM Special Technical Publication No. 51, 1941, Seite 95 ff., bestimmt wurden. Als Siliciumdioxyd mit einer Oberfläche von mindestens 50 m²/g ist pyrogen erzeugtes Siliciumdioxyd bevorzugt. Falls erwünscht, kann aber auch unter Erhaltung der Struktur entwässertes Kieselsäure-Hydrogel und anderes gefälltes Siliciumdioxyd mit einer Oberfläche von mindestens 50 m²/g verwendet werden.

Die wichtigsten Beispiele für Trübungsmittel sind Siliciumcarbid, Titandioxyd und Ilmenit. Vorzugsweise wird Trübungsmittel in Mengen von 30 bis 75 Gewichtsprozent, bezogen auf das Gewicht von Siliciumdioxyd mit einer Oberfläche von mindestens 50 m²/g, eingesetzt.

Beispiele für anorganische Fasern sind Glaswolle, Steinwolle, Schlackenwolle und keramische Fasern, wie solche, die aus der Schmelze von Aluminiumoxyd und Siliciumdioxyd hergestellt sind.

Die Formgebung der Wärmeschutzgegenstände erfolgt durch Verpressen der Gemische, aus denen sie hergestellt werden.

Auf trockenem Wege hergestellte Wärmeschutzgegenstände der erfindungsgemäß zu behandelnden Art sind im Handel erhältlich, z.B. von den Firmen Grünzweig & Hartmann AG, Ludwigshafen (Bundesrepublik Deutschland), und Micropore Insulation Ltd., Kidderminster, Worcester (Großbritannien).

Beispiele für bei dem erfindungsgemäßen Verfahren einsetzbare Organosiliciumverbindungen sind solche der allgemeinen Formel

$$(R_3Si)_a Z \quad \text{oder} \quad R_a SiZ'_{4-a},$$

worin R gleiche oder verschiedene einwertige, gegebenenfalls substituierte Kohlenwasserstoffreste, Z und Z' jeweils Halogen, Wasser

stoff oder einen Rest der Formel —OH, —OR', —NR'X, —ONR'$_2$, —SR', —OOCR' bedeutet, Z jedoch auch —O—, —NX— oder —S— bedeuten kann, wobei R' ein gegebenenfalls substituierter Kohlenwasserstoffrest, meist ein Alkylrest mit 1 bis 4 Kohlenstoffatomen, und X Wasserstoff ist oder die gleiche Bedeutung wie R' hat und a 1 oder 2 ist, sowie Hexamethylcyclotrisiloxan und Octamethylcyclotetrasiloxan.

Das bei weitem wichtigste Beispiel für einen Kohlenwasserstoffrest R ist der Methylrest. Weitere Beispiele für Kohlenwasserstoffreste R sind der Äthyl-, n-Propyl-, Isopropyl-, Vinyl- und Phenylrest.

Beispiele für substituierte Kohlenwasserstoffreste R sind insbesondere halogenierte Kohlenwasserstoffreste, wie der 3,3,3 - Trifluorpropylrest.

Beispiele für Kohlenwasserstoffreste R' sind insbesondere der Methyl- und Äthylrest. Weitere Beispiele für Kohlenwasserstoffreste R' sind der weiter unten folgenden Aufzählung von einzelnen Beispielen hydrophob machender Organosiliciumverbindungen zu entnehmen.

Als Beispiel für einen substituierten Kohlenwasserstoffrest R' sei der Aminoäthylrest genannt.

Einzelne Beispiele für Organosiliciumverbindungen der oben angegebenen Formeln sind Hexamethyldisilazan, Trimethyläthoxysilan, Trimethylsilan, Trimethylchlorsilan, Trimethylsilylmercaptan, Vinyldimethylacetoxysilan, Trimethylsilylisopropylamin, Trimethylsilyläthylamin, Dimethylphenylsilyl - n - propylamin, Vinyldimethylsilyl - n - butylamin, Diäthylaminoxytrimethylsilan, Diäthylaminoxydimethylphenylsilan, Hexamethyldisiloxan, 1,3 - Divinyl - 1,1,3,3 - tetramethyldisiloxan, 1,3 - Diphenyl - 1,1,3,3 - tetramethyldisiloxan, 1,3 - Diphenyl - 1,1,3,3 - tetramethyldisilazan, Dimethyldichlorsilan, Dimethyldiäthoxysilan, Dimethyldimethoxysilan, Diphenyldiäthoxysilan, Vinylmethyldimethoxysilan und Methyltriäthoxysilan.

Bevorzugt als Organosiliciumverbindungen beim erfindungsgemäßen Verfahren sind Hexamethylcyclotrisiloxan, Octamethylcyclotetrasiloxan und Hexamethyldisilazan. Selbstverständlich können die Organosiliciumverbindungen beim erfindungsgemäßen Verfahren einzeln oder als Gemische z.B. ein Gemisch aus Hexamethylcyclotrisiloxan und Octamethylcyclotetrasiloxan, verwendet werden.

Vorzugsweise werden die Organosiliciumverbindungen in Mengen von 10 g bis 400 g je m$^2$ zu hydrophobierender Oberfläche eingesetzt.

Zur Verbesserung des Wasserabweisungsvermögens der Wärmeschutzgegenstände können bei dem erfindungsgemäßen Verfahren Katalysatoren für die Umsetzung von Organosilicium verbindungen mit den Si-gebundenen Hydroxylgruppen auf Siliciumdioxyd eingesetzt werden. Beispiele für solche Katalysatoren sind Amine, wie Cyclohexylamin und n - prim. - Butylamin, sowie FeCl$_3$, Dibutylzinndilaurat, SnCl$_4$, Dibutylzinndichlorid, BCl$_3$HCl, HBr, und Phosphornitridchloride.

Werden solche Katalysatoren mitverwendet, so werden sie vorzugsweise in Mengen von 0,02 bis 2 Gewichtsprozent, bezogen auf die jeweils eingesetzte Menge von Organosiliciumverbindung, eingesetzt.

Das Auftragen von erfindungsgemäß verwendeter Organosiliciumverbindung und gegebenenfalls mitverwendetem Katalysator auf die Oberflächen der Wärmeschutzgegenstände kann z.B. durch Sprühen, Walzen, Tauchen oder Streichen oder dadurch erfolgen, daß die Wärmeschutzgegenstände Dämpfen der Organosiliciumverbindungen ausgesetzt werden.

Vorzugsweise werden die Wärmeschutzgegenstände nach dem Auftragen von Organosiliciumverbindung und gegebenenfalls mitverwendetem Katalysator 5 bis 60 Minuten auf 100 bis 350°C erwärmt, um eine gute Hydrophobierung und eine Entfernung von überschüssiger hydrophobierender Organosiliciumverbindung und gegebenenfalls bei der Hydrophobierung entstandener Spaltprodukte, wie Äthanol oder Wasser, zu erzielen.

Die erfindungsgemäß verbesserten Wärmeschutzgegenstände eignen sich beispielsweise zum Isolieren in Wärmespeicheröfen. Sie können z.B. in Herdplatten und als Bestandteile von Heizhauben oder zum Einbetten von Heizspiralen Verwendung finden.

Dadurch, daß die erfindungsgemäß verbesserten Wärmeschutzgegenstände wasserabweisend sind, muß bei ihrer Lagerung und ihrem Transport im Gegensatz zu Lagerung und Transport von nicht behandelten Wärmeschutzgegenständen der erfindungsgemäß zu behandelnden Art der Zutritt von Wasser nicht mehr so sorgfältig ausgeschaltet werden, und sie eignen sich sogar für Außenisolierungen und nicht nur als Hochtemperaturisolierungen, sondern auch als Isolierungen bei niedrigen Temperaturen.

Die in den folgenden Beispielen eingesetzten Wärmeschutzgegenstände sind Platten, die durch Verpressen eines Gemisches aus 1 500 g Siliciumdioxyd mit einer Oberfläche von 400 m$^2$/g ("HDK T 40", erhältlich von Wacker-Chemie GmbH, München, Bundesrepublik Deutschland), 876 g Ilmenit als Trübungsmittel und 141 g einer anorganischen Faser ("Kerlane" wobei es sich hier um ein Registriertes Warenzeichen handeln dürfte) in einer Glasfasermatte unter einem Druck von 10 kp/cm$^2$ hergestellt worden sind, mit den Abmessungen 90 mm x 90 mm x 10 mm.

Beispiel 1

Wärmeschutzplatten werden 10 bis 20 Sekunden in auf 60°C erwärmtes Hexamethyldisilazan getaucht und dann 30 Minuten auf 200°C im Trockenschrank erwärmt.

Beispiel 2

Wärmeschutzplatten werden 10 bis 20 Sekunden in ein auf 60°C erwärmtes Gemisch aus 60 Gewichtsteilen Hexamethylcyclotrisiloxan und 40 Gewichtsteilen Octamethylcyclotetrasiloxan getaucht und dann 30 Minuten auf 300°C im Trockenschrank erwärmt.

Beispiel 3

Wärmeschutzplatten werden 10 bis 20 Sekunden in ein auf 60°C erwärmtes Gemisch aus 60 Gewichtsteilen Hexamethylcyclotrisiloxan, 40 Gewichtsteilen Octamethylcyclotetrasiloxan und 4 Gewichtsteilen Cyclohexylamin getaucht und dann 30 Minuten auf 150°C im Trockenschrank erwämt.

Beispiel 4

Die in Beispiel 3 beschriebene Arbeitsweise wird wiederholt mit der Abänderung, daß die Temperatur im Trockenschrank 200°C beträgt.

Beispiel 5

Im Trockenschrank auf 70°C vorgewärmte Wärmeschutzplatten werden mit Hexamethyldisilazan 1 bis 2 Minuten besprüht und dann 30 Minuten auf 200°C im Trockenschrank erwärmt.

Beispiel 6

Im Trockenschrank auf 70°C vorgewärmte Wärmeschutzplatten werden mit dem auf 60°C erwärmten, in Beispiel 2 näher beschriebenen Gemisch aus cyclischen Dimethylpolysiloxanen 1 bis 2 Minuten besprüht und dann 30 Minuten auf 300°C im Trockenschrank erwärmt.

Beispiel 7

Im Trockenschrank auf 70°C vorgewärmte Wärmeschutzplatten werden mit dem auf 60°C erwärmten, in Beispiel 3 näher beschriebenen Gemisch aus cyclischen Dimethylpolysiloxanen und Cyclohexylamin 1 bis 2 Minuten besprüht und dann 30 Minuten auf 150°C im Trockenschrank erwärmt.

Beispiel 8

Die in Beispiel 7 beschriebene Arbeitsweise wird wiederholt mit der Abänderung, daß die Temperatur im Trockenschrank 200°C beträgt.

Beispiel 9

In einem auf 200°C erwärmten Behälter werden Wärmeschutzplatten 10 Minuten gasförmigem Hexamethyldisilazan ausgesetzt und dann 2 Stunden im Trockenschrank auf 200°C erwärmt.

Beispiel 10

In dem auf 200°C erwärmten Behälter werden Wärmeschutzplatten 10 Minuten dem Dampf des in Beispiel 2 näher beschriebenen Gemisches aus cyclischen Dimethylpolysiloxanen ausgesetzt und dann 2 Stunden im Trockenschrank auf 300°C erwärmt.

Beispiel 11

In dem auf 200°C erwärmten Behälter werden Wärmeschutzplatten 10 Minuten dem Dampf des in Beispiel 3 näher beschriebenen Gemisches aus cyclischen Dimethylpolysiloxanen und Cyclohexylamin ausgesetzt und dann 2 Stunden im Trockenschrank auf 150°C erwärmt.

Beispiel 12

Die in Beispiel 11 beschriebene Arbeitsweise wird wiederholt mit der Abänderung, daß die Temperatur im Trockenschrank 200°C beträgt.

Vergleichsversuch

Wärmeschutzplatten werden 30 Minuten im Trockenschrank ohne vorhergehende Behandlung erwärmt.

In der folgenden Tabelle sind Eigenschaften der gemäß den Beispielen 1 bis 12 bzw. gemäß dem Vergleichsversuch behandelten Platten angegeben.

Erläuterungen zur Tabelle:
+) nicht bestimmt
++) Die verhältnismäßig schlechten Werte erklären sich durch ungleichmäßigen Auftrag, weil beim Sprühen Hexamethylcyclotrisiloxan in der Düse auskristallisierte.

Tabelle

| Beispiel | Gewichtszunahme durch Auftragen von Organosiliciumverbindung vor Erwärmen im Trockenschrank g | Gewicht nach Erwärmen im Trockenschrank minus ursprünglichem Gewicht g | Gewicht nach 48 Std. Lagerung bei 97 Gew.-% relativer Luftfeuchte minus Gewicht nach Erwärmen im Trockenschrank g | Gewicht nach 48 Std. Lagerung unter Wasser minus Gewicht nach Erwärmen im Trockenschrank g |
|---|---|---|---|---|
| 1 | 6,5 | 0,3 | 0,94 | 8,1 |
| 2 | 4 | 0,33 | 1,27 | 6,38 |
| 3 | 4 | 0,95 | 1,91 | 4,65 |
| 4 | 4 | 0,85 | 0,95 | 3,85 |
| 5 | 5,79 | +) | 0,66 | 2,91 |
| 6 | 5,12 | +) | 1,53 | 39,43 ++) |
| 7 | 3,04 | +) | 1,12 | 23,32 ++) |
| 8 | 2,28 | +) | 1,42 | 15,48 ++) |
| 9 | +) | +) | 0,35 | 1,7 |
| 10 | +) | +) | 1,19 | 57,66 |
| 11 | +) | +) | 0,44 | 2,02 |
| 12 | +) | +) | 0,40 | 1,6 |
| Vergleichsversuch | — | —0,3 | 3,05 | 61,38 |

## Patentansprüche

1. Verfahren zum Verbessern von auf trockenem Wege hergestellten Wärmeschutzgegenständen aus Siliciumdioxyd mit einer Oberfläche von mindestens 50 m²/g, Trübungsmittel und gegebenenfalls anorganischer Faser, dadurch gekennzeichnet, daß die Oberfläche der zu verbessernden Gegenstände mit mindestens einer Organosiliciumverbindung mit 1 bis 4 Siliciumatomen hydrophobiert und überschüssige, hydrophobierende Organosiliciumverbindung entfernt wird.

2. Verfahren nach Anspruch, 1 dadurch gekennzeichnet, daß als Organosiliciumverbindungen Hexamethylcyclotrisiloxan, Octamethylcyclotetrasiloxan oder Hexamethyldisilazan oder Gemische aus zwei oder mehr dieser organosiliciumverbindungen verwendet werden.

3. Verfahren nach Anspruch 1, dadurch gekennzeichnet, daß ein Katalysator für die Umsetzung von Organosiliciumverbindungen mit den Si-gebundenen Hydroxylgruppen auf Siliciumdioxyd mitverwendet wird.

## Revendications

1. Procédé pour améliorer des objets isolants thermiques fabriqués par voie sèche à partir d'un dioxyde de silicium d'une surface d'au moins 50 m²/g, d'un agent de turbidité et éventuellement de fibres minérales, procédé caractérisé en ce qu'on hydrofuge la surface des objets à améliorer avec au moins un composé organo-silicique contenant de 1 à 4 atomes de silicium et on élimine l'excès du composé organo-silicique hydrofugeant.

2. Procédé selon la revendication 1, caractérisé en ce qu'on utilise, comme composés organo-siliciques, l'hexaméthylcyclotrisiloxane, 1'octaméthylcyclotétrasiloxane ou l'hexaméthyldisilazane ou des mélanges de deux ou de plus de deux de ces composés organo-siliciques.

3. Procédé selon la revendication 1, caractérisé en ce qu'on utilise également un catalyseur pour la réaction des composés organo-siliciques avec les groupes hydroxy liés à Si sur le dioxyde de silicium.

## Claims

1. Process for improving heat-insulating articles manufactured in a dry manner from silica having a specific surface area of at least 50 m²/g, opacifiers and, optionally, inorganic fibres, characterised in that the surface of the articles to be improved is rendered hydrophobic with at least one organosilicon compound having from 1 to 4 carbon atoms, and excess organosilicon compound for rendering the surface of the article hydrophobic is removed.

2. Process according to claim 1, characterised in that hexamethylcyclotrisiloxane, octamethylcyclotetrasiloxane or hexamethyldisilazane or a mixture of two or more of these organosilicon compounds is used as the organosilicon compound.

3. Process according to claim 1, characterised in that a catalyst promoting the reaction of organosilicon compounds with Si-bonded hydroxyl groups on silica is used concomitantly.